# EUROPEAN PATENT APPLICATION

(11) **EP 4 692 241 A1**
(43) Date of publication of application: **11.02.2026**
(21) Application number: 24784749.4
(22) Date of filing: 22.03.2024
(51) Int. Cl.: C08L 83/04, C08K 3/22, C08K 5/5415

(54) **SILICONE COMPOSITION**

(30) Priority: 07.04.2023 JP 2023062586
(71) Applicant: SHIN-ETSU CHEMICAL CO., LTD., Tokyo 1000005 (JP)
(72) Inventor: IWATA, Mitsuhiro, Annaka-shi, Gunma 379-0224 (JP)
(74) Representative: Mewburn Ellis LLP
(86) International application number: PCT/JP2024/011182
(87) International publication number: WO 2024/209958

(57) **Abstract**

Provided is a silicone composition which has a thermal conductivity of 4.0 W/m·K or more but less than 7.0 W/m·K when measured by the hot disk method according to ISO 22007-2, and has a viscosity at 25°C of 5-800 Pa·s when measured with a spiral viscometer at a rotation speed of 10 rpm. The silicone composition maintains fluidity and has good handling properties and excellent heat dissipation performance, even when highly filled with a thermally conductive filler to impart excellent insulation properties and thermal conductivity thereto. Further, the silicone composition has excellent durability and reliability under high temperature or high temperature and high humidity conditions.

## Description

### TECHNICAL FIELD

The present invention relates to a silicone composition.

### BACKGROUND ART

Because many electronic components generate heat during use, it is necessary to remove the heat from the electronic components for their proper functioning. In particular, integrated circuit elements such as CPUs used in personal computers are generating increasing amounts of heat due to higher operating frequencies. This makes thermal management a critical issue.

Various methods have been proposed for removing the heat. In particular, for electronic components generating a large amount of heat, methods have been proposed in which thermally conductive materials such as thermally conductive grease compositions or thermally conductive sheets are interposed between the electronic components and members such as heat sinks to dissipate heat. However, these methods have not been satisfactory for heat dissipation in areas where differences in design thickness are particularly large (see Patent Document 1).

As such thermally conductive materials, heat dissipation grease compositions based on silicone oil and containing zinc oxide or an alumina powder have been proposed. However, their heat resistance at 200°C has been unsatisfactory (see Patent Documents 2 and 3).

In order to improve thermal conductivity, Patent Document 1 proposes, as a thermally conductive material including an aluminum nitride powder, a thixotropic thermally conductive material including at least one selected from liquid organosilicone carriers, silica fibers, dendritic zinc oxide, flaky aluminum nitride and flaky boron nitride. Patent Document 4 proposes a silicone grease composition obtained by incorporating a spherical hexagonal crystal aluminum nitride powder having a specific particle size range into a specific organopolysiloxane. Patent Document 5 proposes a thermally conductive silicone grease composition obtained by combining a fine aluminum nitride powder with a coarse aluminum nitride powder. Patent Document 6 proposes a thermally conductive silicone grease composition obtained by combining an aluminum nitride powder with a zinc oxide powder. Patent Document 7 proposes a thermally conductive grease composition using an aluminum nitride powder surface-treated with organosilane; however, none of these have been satisfactory in terms of durability and reliability. Patent Document 8 proposes a thermally conductive silicone composition containing silicone resin, diamond, zinc oxide and a dispersant; however, its post-heat resistance properties have been particularly unsatisfactory.

Metals are materials having high thermal conductivity and can be used in locations where insulation of electronic components is not required. Patent Document 9 proposes a thermally conductive grease composition obtained by mixing a metallic aluminum powder into a base oil such as silicone oil; however, it has been unsatisfactory due to the lack of insulating properties. All of these thermally conductive materials and thermally conductive grease compositions have recently become insufficient for handling the amount of heat generated by integrated circuit devices such as CPUs.

As can be understood from the theoretical formulas of Maxwell and Bruggeman, the thermal conductivity of a material obtained by incorporating a thermally conductive filler into silicone oil depends little on the thermal conductivity of the thermally conductive filler when the volume fraction of the thermally conductive filler is 0.6 or less. The thermally conductive filler begins to have an effect on thermal conductivity only when the volume fraction exceeds 0.6. That is, in order to increase the thermal conductivity of a thermally conductive grease composition, it is important to achieve a high loading of the thermally conductive filler and to use a filler having high thermal conductivity. However, when the filler is highly loaded, the fluidity of the thermally conductive grease composition deteriorates, thereby degrading workability such as coatability (i.e., dispensability and screen printability), and rendering the composition practically unusable. Furthermore, reduced fluidity results in insufficient conformity to microscopic unevenness present on the surfaces of electronic components and heat sinks. As a result, contact thermal resistance may be increased disadvantageously.

In order to obtain a thermally conductive material that allows high filler loading and has good fluidity, studies have been conducted on incorporating alkoxy group-containing organopolysiloxanes, which improve dispersibility by surface-treating thermally conductive fillers, into thermally conductive materials (see Patent Documents 10 and 11). However, these treatment agents have had the drawback of deteriorating the performance of the thermally conductive materials due to degradation by hydrolysis or the like under high-temperature and high-humidity conditions.

A thermally conductive silicone grease composition that suppresses the deterioration of performance of thermally conductive materials even under high-temperature and high-humidity conditions has been proposed. However, while the average particle size of the thermally conductive filler is specified, no specifications are provided for the shape of the thermally conductive filler, hydroxyl group content and coarse particles, rendering it unsatisfactory especially for applications requiring insulating properties (see Patent Document 12).

JP 5755977 (Patent Document 13) proposes a highly thermally conductive resin composition that includes a spherical aluminum oxide powder having a specific average sphericity, a specific hydroxyl group content and an average particle size of 10 to 50 µm and an aluminum oxide powder having an average particle size of 0.3 to 1 µm, with the compounding ratio and volume ratio of the aluminum oxides specified. However, while the particle size of the spherical aluminum oxide powder is specified to a maximum of 50 µm, there are no specifications for the range or content of coarse particles. This leads to insufficient thermal resistance when the highly thermally conductive resin composition is applied to films thinner than 50 µm.

Re-published No. 2002-092693 (Patent Document 14) proposes a thermally conductive silicone composition using an alumina powder with an average particle size of 0.1 to 100 µm. However, no specific thermal conductivity or viscosity requirements are provided. Also, a thermally conductive silicone composition that may include a mixture of a spherical alumina powder with an average particle size of 5 to 50 µm (excluding 5 µm) and a spherical or irregular alumina powder with an average particle size of 0.1 to 5 µm, with the compounding ratio and weight ratio of the aluminum oxides specified, has been proposed. However, there are no specifications for the average sphericity or hydroxyl group content of the spherical alumina with a larger average particle size and the size or content of the coarse particles. As with Patent Document 14, this also leads to insufficient thermal resistance.

In JP 6866877 (Patent Document 15), a silicone composition containing an α-aluminum oxide powder with a hexagonal close-packed crystal structure, which has a polyhedral shape with specified average particle size and coarse particle content, has been found to reduce contact thermal resistance and improve thermal resistance. However, further increases in thermal resistance have been desired.

### PRIOR ART DOCUMENTS

### PATENT DOCUMENTS

Patent Document 1: JP-A S56-28264
Patent Document 2: JP-B S52-33272
Patent Document 3: JP-B S59-52195
Patent Document 4: JP-A H02-153995
Patent Document 5: JP-A H03-14873
Patent Document 6: JP-A H10-110179
Patent Document 7: JP-A 2000-63872
Patent Document 8: JP-A 2002-30217
Patent Document 9: JP-A 2000-63873
Patent Document 10: JP-A 2004-262972
Patent Document 11: JP-A 2005-162975
Patent Document 12: JP 4933094
Patent Document 13: JP 5755977
Patent Document 14: Re-published No. 2002-092693
Patent Document 15: JP 6866877

### SUMMARY OF INVENTION

### TECHNICAL PROBLEM

The present invention has been made in consideration of the above circumstances. An object of the present invention is to provide a silicone composition that maintains good fluidity, good handling properties, excellent heat dissipation performance, and excellent durability and reliability under high-temperature or high-temperature and high-humidity conditions, even when the thermal conductive fillers are highly loaded to impart excellent insulating properties and thermal conductivity.

### SOLUTION TO PROBLEM

The inventor of the present invention conducted extensive studies to achieve the object and, as a result, found that a silicone composition containing α-aluminum oxide having a polyhedral shape with average particle size and coarse particle content specified provides excellent insulating properties and thermal conductivity, as well as good fluidity, which results in good handling properties. Moreover, because it conforms to microscopic unevenness and reduces contact thermal resistance, a low thermal resistance silicone composition having excellent heat dissipation performance can be produced. In addition, it is highly durable under high-temperature or high-temperature and high-humidity conditions, which improves its reliability during implementation. Thus, the present invention was made.

Accordingly, the present invention provides the following silicone composition:
1. A silicone composition, including:
   (A) an organopolysiloxane having a kinematic viscosity of 10 to 10,000 mm²/s at 25°C, the organopolysiloxane being represented by general formula (1) below: 50 to 100 parts by mass, 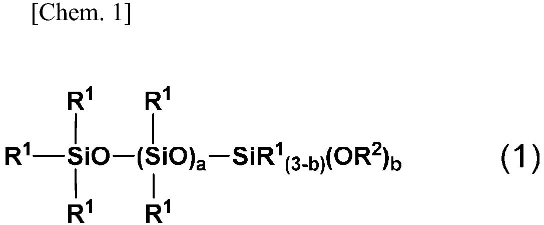 wherein each R¹ independently represents an unsubstituted or substituted monovalent hydrocarbon group, each R² independently represents an alkyl group, an alkoxyalkyl group, an alkenyl group or an acyl group, a represents an integer of 5 to 100 and b represents an integer of 1 to 3;
   (B) an organopolysiloxane having a kinematic viscosity of 10 to 100,000 mm²/s at 25°C, the organopolysiloxane being represented by average composition formula (2) below: 0 to 50 parts by mass, (note that a total amount of the components (A) and (B) is 100 parts by mass)

      R³_{c}SiO_{(4-c)/2} (2)

      wherein each R³ independently represents an unsubstituted or substituted monovalent hydrocarbon group having 1 to 18 carbon atoms and c represents a number of 1.8 to 2.2;
   (C) an α-aluminum oxide powder having a hexagonal close-packed crystal structure consisting of a polyhedron having 8 or more faces, the α-aluminum oxide powder having a particle shape having a D/H ratio of 0.3 or more and 30 or less, where D represents a maximum particle diameter parallel to a hexagonal lattice face of the hexagonal close-packed lattice and H represents a particle diameter perpendicular to the hexagonal lattice face, the α-aluminum oxide powder having an average particle size of 7 to 30 µm, a proportion of coarse particles of 50 µm or more in a laser diffraction particle size distribution being 1% by mass or less relative to the total amount of the component (C), the α-aluminum oxide powder having a purity of 99% or more; and
   (D) a zinc oxide powder having an average particle size of 0.01 µm or more and less than 3 µm, a proportion of coarse particles of 10 µm or more in a laser diffraction particle size distribution being 1% by mass or less relative to the total amount of the component (D),

   (note that a ratio between the components (C) and (D) is 5 : 5 to 9.5 : 0.5 by mass, and a total content of (C) and (D) is 75% to 85% by volume)
   the silicone composition having a thermal conductivity of 4.0 W/m·K or more and less than 7.0 W/m·K, as measured by a hot disk method in accordance with ISO 22007-2, the silicone composition having a viscosity of 5 to 800 Pa·s at 25°C, as measured with a spiral viscometer at a rotation speed of 10 rpm.
2. The silicone composition according to 1, wherein a thermal resistance of the silicone composition at 25°C, as measured by a laser flash method, is 11 mm²·K/W or less.
3. The silicone composition according to 1 or 2, wherein the thermal resistance of the silicone composition at 25°C, as measured by the laser flash method, after being left to stand in a 130°C/85%RH atmosphere for 96 hours, is 11 mm²·K/W or less.
4. The silicone composition according to any one of 1 to 3, wherein a viscosity of the silicone composition at 25°C, as measured with a spiral viscometer at a rotation speed of 10 rpm, subsequent to a 200°C × 100-hour thermal aging, is 1,000 Pa·s or less.
5. The silicone composition according to any one of 1 to 4, further including (E) a volatile solvent capable of dispersing or dissolving the components (A) and (B): 100 parts by mass or less, relative to 100 parts by mass of the total amount of the components (A) and (B).
6. The silicone composition according to any one of 1 to 5, further including (F) an alkoxysilane represented by general formula (3) below: 0.1 to 50 parts by mass, relative to 100 parts by mass of the total amount of the components (A) and (B),

   R⁴_{d}R⁵ₑSi(OR⁶)_{4-d-e} (3)

   wherein each R⁴ independently represents an alkyl group having 9 to 15 carbon atoms, each R⁵ independently represents an unsubstituted or substituted monovalent hydrocarbon group having 1 to 8 carbon atoms, each R⁶ independently represents an alkyl group having 1 to 6 carbon atoms, d represents an integer of 1 to 3, e represents a integer of 0 to 2, where d + e is an integer of 1 to 3, and wherein the components (C) and (D) are surface-treated with the component (F).
7. The silicone composition according to any one of 1 to 6, having a volume resistivity of 1×10⁹ Ω·cm or more.

### ADVANTAGEOUS EFFECTS OF INVENTION

The silicone composition according to the present invention has good thermal conductivity as well as good insulating properties and maintains good fluidity, which results in excellent workability. In addition, because the silicone composition has excellent adhesion to heat-generating electronic components and heat-dissipating parts, it can reduce contact thermal resistance and achieve low thermal resistance. That is, interposing the silicone composition according to the present invention between a heat-generating electronic component and a heat-dissipating part enables heat generated from the heat-generating electronic component to be efficiently dissipated to the heat-dissipating part. Furthermore, the silicone composition according to the present invention also has excellent durability under high-temperature or high-temperature and high-humidity conditions, and therefore provides extremely good reliability when used for heat dissipation in general power supplies and electronic devices, or for heat dissipation of integrated circuit elements such as LSIs and CPUs used in electronic equipment such as personal computers and digital video disc drives. Accordingly, the low thermal resistance silicone composition according to the present invention can significantly improve the stability and lifespan of heat-generating electronic components and electronic devices incorporating them.

### DESCRIPTION OF EMBODIMENTS

The present invention are described in detail below.

### [Component (A)]

The component (A) is an organopolysiloxane represented by general formula (1) below: 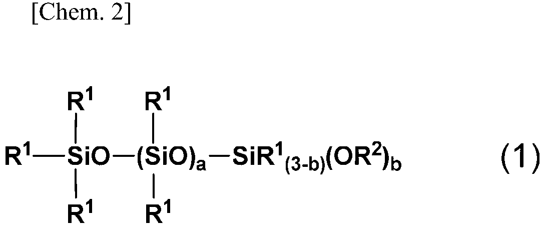 (in general formula (1), each R¹ independently represents an unsubstituted or substituted monovalent hydrocarbon group, each R² independently represents an alkyl group, an alkoxyalkyl group, an alkenyl group or an acyl group, a is an integer of 5 to 100 and b is an integer of 1 to 3), and has a kinematic viscosity of 10 to 10,000 mm²/s at 25°C. They may be used alone or in combination of two or more kinds.

The component (A) maintains the fluidity of the composition and imparts good handling properties to the composition, even when the thermally conductive fillers, that is, the components (C) and (D), are highly loaded into the composition in order to obtain a thermally conductive silicone composition.

Each R¹ independently represents an unsubstituted or substituted monovalent hydrocarbon group, preferably having 1 to 18 carbon atoms, more preferably 1 to 10 carbon atoms. Specific examples thereof include straight-chain alkyl groups, branched-chain alkyl groups, cyclic alkyl groups, alkenyl groups, aryl groups, aralkyl groups and halogenated alkyl groups. Examples of the straight-chain alkyl groups include a methyl group, an ethyl group, a propyl group, a hexyl group and an octyl group. Examples of the branched-chain alkyl groups include an isopropyl group, an isobutyl group, a tert-butyl group and a 2-ethylhexyl group. Examples of the cyclic alkyl groups include a cyclopentyl group and a cyclohexyl group. Examples of the alkenyl groups include a vinyl group and an allyl group. Examples of the aryl groups include a phenyl group and a tolyl group. Examples of the aralkyl groups include a 2-phenylethyl group and a 2-methyl-2-phenylethyl group. Examples of the halogenated alkyl groups include a 3,3,3-trifluoropropyl group, a 2-(nonafluorobutyl)ethyl group and a 2-(heptadecafluorooctyl)ethyl group. R¹ is preferably a methyl group or a phenyl group.

Each R² independently represents an alkyl group, an alkoxyalkyl group, an alkenyl group or an acyl group. Preferably, each R² has 1 to 18 carbon atoms, more preferably 1 to 10 carbon atoms. Examples of the alkyl group include straight-chain, branched-chain and cyclic alkyl groups, similar to those exemplified for R¹. Examples of the alkenyl group include alkenyl groups similar to those exemplified for R¹. Examples of the alkoxyalkyl group include a methoxyethyl group and a methoxypropyl group. Examples of the acyl group include an acetyl group and an octanoyl group. R² is preferably an alkyl group, and more preferably a methyl group or an ethyl group.

a is an integer of 5 to 100, preferably an integer of 5 to 50, more preferably an integer of 5 to 30. b is an integer of 1 to 3, preferably 3.

The kinematic viscosity of the component (A) at 25°C is 10 to 10,000 mm²/s, preferably 10 to 5,000 mm²/s. If the kinematic viscosity is less than 10 mm²/s, oil bleed occurs from the resulting silicone composition. If the kinematic viscosity exceeds 10,000 mm²/s, the fluidity of the resulting silicone composition becomes poor. In the present invention, the kinematic viscosity of the component (A) is a value at 25°C measured by an Ostwald viscometer.

The amount of the component (A) is 50 to 100 parts by mass, preferably 55 to 95 parts by mass. Note that the total amount of the component (A) and the component (B) described below is 100 parts by mass. When the amount falls within this range, the silicone composition tends to maintain good fluidity and workability. Also, it becomes easy to highly load the components (C) and (D), which are thermally conductive fillers, into the silicone composition. If the amount of the component (A) is less than 50 parts by mass, it is difficult to highly load the thermally conductive fillers of the components (C) and (D) into the composition.

Specific preferable examples of the component (A) include the following.

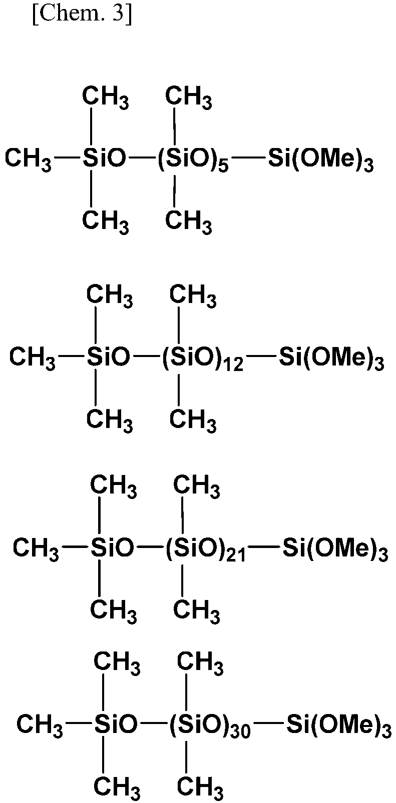

### [Component (B)]

The component (B) according to the present invention is an organopolysiloxane having a kinematic viscosity of 10 to 100,000 mm²/s at 25°C, which is represented by the following average composition formula (2):

R³_{c}SiO_{(4-c)/2} (2)

(in the above formula, R³ independently represents an unsubstituted or substituted monovalent hydrocarbon group having 1 to 18 carbon atoms and c is a number of 1.8 to 2.2), and may be used alone or in combination of two or more kinds. The component (B) is used for imparting properties such as those of a viscosity modifier or a tackifier to the silicone composition according to the present invention.

Each R³ independently represents an unsubstituted or substituted monovalent hydrocarbon group having 1 to 18 carbon atoms, preferably having 1 to 10 carbon atoms. Examples of R³ include an alkyl group such as a methyl group, an ethyl group, a propyl group, a hexyl group, an octyl group, a decyl group, a dodecyl group, a tetradecyl group, a hexadecyl group or an octadecyl group; a cycloalkyl group such as a cyclopentyl group or a cyclohexyl group; an alkenyl group such as a vinyl group or an allyl group; an aryl group such as a phenyl group or a tolyl group; an aralkyl group such as a 2-phenylethyl group or a 2-methyl-2-phenylethyl group; and a halogenated hydrocarbon group such as a 3,3,3-trifluoropropyl group, a 2-(perfluorobutyl)ethyl group, a 2-(perfluorooctyl)ethyl group or a p-chlorophenyl group. Among them, a methyl group, a phenyl group and an alkyl group having 6 to 18 carbon atoms are preferable, and a methyl group and a phenyl group are more preferable.

c is a number of 1.8 to 2.2, preferably 1.9 to 2.1, from the standpoint of the viscosity required for the composition according to the present invention as a low thermal resistance silicone composition.

The kinematic viscosity of the component (B) at 25°C is 10 to 100,000 mm²/s, preferably 10 to 10,000 mm²/s. If the kinematic viscosity is less than 10 mm²/s, liquid separation or oil bleed occurs from the resulting silicone composition. If the kinematic viscosity exceeds 100,000 mm²/s, the fluidity of the resulting silicone composition becomes poor, which may reduce workability. Note that the kinematic viscosity of the component (B) is also a value at 25°C measured by an Ostwald viscometer.

Specific examples of the component (B) include the following.

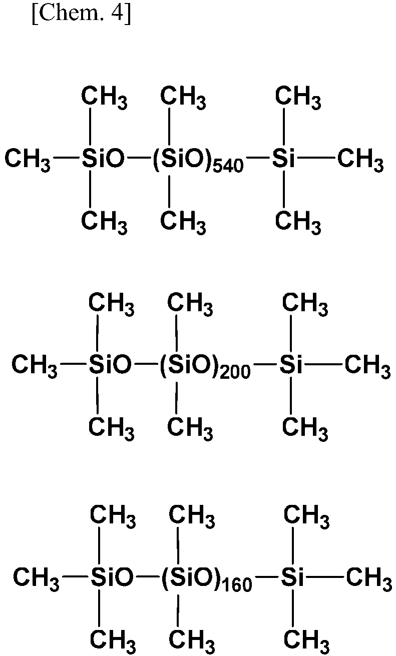

The amount of the component (B) is 0 to 50 parts by mass, more preferably 5 to 45 parts by mass (note that the total amount of the component (A) described above and the component (B) is 100 parts by mass). The component (B) may be omitted. When the amount falls within this range, the silicone composition tends to maintain good fluidity and workability, and it becomes easy to highly load the thermally conductive fillers as the components (C) and (D) described below into the composition. If the amount of the component (B) exceeds 50 parts by mass, it becomes difficult to highly load the thermally conductive fillers of the components (C) and (D) into the silicone composition.

### [Component (C)]

The component (C) according to the present invention is an α-aluminum oxide powder having a hexagonal close-packed crystal structure composed of polyhedrons with 8 or more faces, and having a particle shape with a D/H ratio of 0.3 or more and 30 or less, where D represents the maximum particle size parallel to the hexagonal lattice face of the hexagonal close-packed lattice and H represents the particle size perpendicular to the hexagonal lattice face. The powder has an average particle size of 7 to 30 µm. The proportion of coarse particles of 50 µm or more in a laser diffraction particle size distribution is 1% by mass or less relative to the total amount. The powder has a purity of 99% or more. They may be used alone or in combination of two or more kinds.

The aluminum oxide as the component (C) has a hexagonal close-packed crystal structure composed of polyhedrons having eight or more faces, preferably ranging from octahedrons to icosahedrons. More preferably, the aluminum oxide is α-aluminum oxide having a crystal structure consisting essentially of 8 faces and/or 16 faces. The crystal structure can be confirmed using the image diffractometer described below.

In the present invention, the particle shape of the component (C) is such that the D/H ratio is 0.3 or more and 30 or less, where D represents the maximum particle size parallel to the hexagonal lattice face of α-aluminum oxide powder having a hexagonal close-packed structure, and H represents the particle size perpendicular to the hexagonal lattice face. The D/H ratio can be determined by importing particle images taken with a scanning electron microscope into an image analysis system, such as "JSM-7500F" manufactured by JEOL, and analyzing them as follows. Specifically, on the basis of the images, the maximum particle diameter parallel to the hexagonal lattice face of each particle is measured as D, the particle diameter perpendicular to the hexagonal lattice face as H. The D/H ratio is calculated for any 10 particles measured in the above manner, and the average thereof is taken as the D/H ratio. In the present invention, the D/H ratio is preferably 0.3 to 5. If the D/H ratio is less than 0.3, the fillability into the resin deteriorates. This reduces contact between particles and increases thermal resistance due to an increase in inter-particle contact thermal resistance. If the D/H ratio of the component (C) exceeds 30, contact between particles becomes significant. This increases the surface unevenness of the silicone composition and interfacial thermal resistance. As a result, thermal resistance is increased.

The average particle size (primary and/or secondary particle size) of the component (C) on a volume basis is 7 to 30 µm, preferably 10 to 25 µm. When the average particle size falls within this range, the bulk density of the component (C) tends to increase and the specific surface area of the component (C) tends to decrease. This makes it easy to highly load the component (C) into the silicone composition according to the present invention. If the average particle size is less than 7 µm, it becomes difficult to achieve the thermal conductivity intended in the present invention. On the other hand, if the average particle size exceeds 30 µm, oil separation may easily proceed. This may cause thermal resistance to deteriorate over time.

When the proportion of coarse particles of 50 µm or more in the laser diffraction particle size distribution is 1% by mass or less relative to the total amount of the component (C), the desired thermal resistance and high thermal conductivity can be both achieved. However, if the proportion of the coarse particles of 50 µm or more exceeds 1% by mass relative to the total amount of the component (C), a thickness of 60 µm or less may fail to be achieved. In addition, the desired thermal resistance is unlikely to be achieved. The proportion of such coarse particles is preferably 0.5% by mass or less relative to the total amount of the component (C).

In the present invention, the volume-basis average particle size of the component (C) can be measured using, for example, a laser diffraction particle size distribution analyzer "SALD-2300" manufactured by Shimadzu Corporation. For preparing an evaluation sample, 5 g of the thermally conductive powder that is to be analyzed is added to 50 mL of pure water in a glass beaker. The resulting mixture is stirred with a spatula and then subjected to a dispersion treatment with an ultrasonic cleaner for 10 minutes. The solution of the thermally conductive material powder, which has been subjected to the dispersion treatment, is added dropwise with a dropper to the sampler section of the analyzer. After waiting for the absorbance to stabilize to a measurable level, the measurement is started. The laser diffraction particle size distribution analyzer calculates a particle size distribution from the light intensity distribution data of light diffracted/scattered by particles which are detected with a sensor. The average particle size is determined by multiplying the measured particle diameters by the relative particle proportion (difference %), and dividing the product by the total relative particle proportion (100%). Note that the term "average particle size" refers to the average diameter of the particles. For example, the content of coarse particles of 50 µm or more in the component (C) can also be easily determined from the overall particle size distribution. Note that plural kinds with different average particle sizes may be used in combination without impairing the advantageous effects of the present invention.

The purity of the component (C) is 99% or more, preferably 99.5% or more. If the purity is less than this, thermal resistance tends to increase. Note that, in the present invention, the purity of the component (C) is a value measured by atomic absorption spectrophotometry in accordance with JIS K 1410. Not also that the compounding ratio of the component (C) is as described below.

### [Component (D)]

The component (D) is a zinc oxide powder having an average particle size of 0.01 µm or more and less than 3 µm. Furthermore, the content of coarse particles of 10 µm or more in the laser diffraction particle size distribution is 1% by mass or less relative to the total amount of the component (D). The zinc oxide powder as the component (D) functions as a thermally conductive filler in the silicone composition according to the present invention. The component (D) may be used alone or in combination of two or more kinds.

The average particle size of the component (D) is 0.01 µm or more and less than 3 µm on a volume basis, preferably 0.01 to 2 µm, more preferably 0.01 to 1 µm, further preferably 0.01 to 0.5 µm. When the average particle size falls within this range, the component (D) tends to have high bulk density and small specific surface area. This facilitates high loading of the component (D) into the silicone composition according to the present invention. If the average particle size is less than 0.01 µm, the fillability into the resin deteriorates and viscosity increases significantly. If the average particle size exceeds 3 µm, oil separation occurs easily.

The content of coarse particles of 10 µm or more in the component (D), as determined by laser diffraction particle size distribution, is 1% by mass or less, based on the total amount of the component (D), preferably 0.2% by mass or less. Maintaining the content within this range allows the desired thermal resistance and high thermal conductivity to be achieved. If the content of coarse particles of 10 µm or more exceeds 1% by mass relative to the total amount of the component (D), a thickness of 20 µm or less may not be achieved. In addition, desired thermal resistance may not be achieved. Note that the average particle size and the coarse particle content for the component (D) are determined in the same manner as for the component (C).

The shape of the component (D) may be either spherical or irregular, or a mixture thereof. As for the component (D) according to the present invention, the term "irregular" refers to shapes other than spherical, such as rod-like, needle-like or disk-like; it is not particularly limited as long as the advantageous effects of the present invention are not impaired. The component (D) may consist only of spherical particles, only of irregular particles, or a combination of these. Note that, as for the component (D), the term "spherical" refers to a shape having an average sphericity of preferably 0.8 or more, more preferably 0.9 or more.

The average sphericity of the component (D) can be determined by importing particle images taken with a scanning electron microscope into an image analysis system, such as "JSM-7500F" manufactured by JEOL, and analyzing them as follows. Specifically, the projected area (X) and perimeter (Z) of each particle are measured using the images. When the area of a perfect circle having the same perimeter (Z) is defined as (Y), the sphericity of the particle can be expressed as X/Y. Assuming a perfect circle having the same perimeter (Z) as the sample particle, Z = 2πr and Y = πr² (where r represents a radius), thus Y = π × (Z/2π)₂. Accordingly, the sphericity of each particle can be calculated as sphericity = X/Y = X × 4π/Z². The sphericity is calculated for any 100 particles, and the average thereof is defined as average sphericity.

The purity of the component (D) is preferably 99.5% or more, particularly preferably 99.8% or more from the standpoint of impurities such as Pb and Cd. The method for measuring the purity is the same as that described for the component (C).

The compounding ratio between the components (C) and (D) is 5 : 5 to 9.5 : 0.5 by mass ratio, preferably 6 : 4 to 9 : 1. If the proportion of the component (C) is less than 5 by mass ratio, the fillability of the filler may deteriorate. On the other hand, if the proportion of the component (C) exceeds 9.5 by mass ratio, it becomes difficult to densely load the filler. This reduces thermal conductivity.

The total amount of the components (C) and (D) in the silicone composition according to the present invention, that is, the total content of the thermally conductive fillers, is 75% to 85% by volume, based on the total amount of the composition, preferably 76% to 84% by volume. If the total amount of the components (C) and (D) is less than 75% by volume, the silicone composition has insufficient thermal conductivity. If the total amount exceeds 85% by volume, it becomes difficult to load the thermally conductive fillers. In the present invention, even when the total amount of the components (C) and (D) is large as described above, the intended advantageous effects can still be achieved.

### [Component (E)]

The composition according to the present invention may further include, as the component (E), a volatile solvent capable of dispersing or dissolving the components (A) and (B). In the case where the composition according to the present invention further includes the component (F) described below in addition to the components (A) and (B), it is preferable that the volatile solvent as the component (E) be also capable of dispersing or dissolving the component (F). The component (E) is not particularly limited and may be any component capable of dissolving or dispersing the components (A) and (B) and, optionally, the component (F). The component (E) can be used alone or in combination of two or more kinds.

Since the thermal conductivity of a thermally conductive silicone composition basically correlates with the filler loading of thermally conductive fillers, the higher the filler loading of the thermally conductive fillers, the more the thermal conductivity tends to be improved. However, naturally, when the loading amount of the thermally conductive fillers is increased, the viscosity of the thermally conductive silicone composition tends to increase, and the dilatancy of the composition also tends to increase when shear is applied. In particular, in screen printing, when a thermally conductive silicone composition exhibits strong dilatancy during squeegeeing, the flowability of the thermally conductive silicone composition is temporarily strongly suppressed, and the thermally conductive silicone composition may fail to pass through a screen mask and a screen mesh. This results in extremely deteriorated coatability. Thus, it has been difficult to easily and uniformly apply a highly thermally conductive silicone composition with a high loading of thermally conductive fillers in a thin layer onto a heat sink or the like by screen printing. Even when the silicone composition according to the present invention includes the thermally conductive fillers as the components (C) and (D) at a high filler loading, when the composition includes the volatile solvent as the component (E), the viscosity tends to significantly decrease, and dilatancy is less likely to occur. This improves coatability and makes it easier to apply the composition onto a heat sink or the like by screen printing. After application, the component (E) can be easily volatilized either at normal temperature or by active heating. Therefore, in the present invention, it is possible to apply the low thermal resistance silicone composition with a high loading of the thermally conductive fillers easily and uniformly onto a heat sink or the like in a thin layer by screen printing.

The boiling point of the component (E) is preferably 80°C to 260°C. When the boiling point falls within this range, it becomes easier to prevent the component (E) from volatilizing rapidly from the silicone composition during the coating operation of the silicone composition. This makes it easier to suppress an increase in the viscosity of the silicone composition and to ensure the coatability of the silicone composition. In addition, after the coating operation of the silicone composition, the component (E) is less likely to remain in the silicone composition. This makes it easier to improve the heat dissipation properties.

Specific examples of the component (E) include toluene, xylene, acetone, methyl ethyl ketone, cyclohexane, n-hexane, n-heptane, butanol, isopropanol (IPA) and isoparaffin-based solvents. Among them, from the standpoint of safety, health and workability, isoparaffin-based solvents are preferable, and isoparaffin-based solvents having a boiling point of 80°C to 260°C are particularly preferable.

When the component (E) is added to the composition according to the present invention, its amount is preferably 100 parts by mass or less, more preferably 75 parts by mass or less, relative to 100 parts by mass of the total amount of the components (A) and (B). When the amount falls within this range, it becomes easier to suppress the rapid sedimentation of the components (C) and (D). This facilitates improvement in the storage stability of the silicone composition. Although the lower limit of the amount of the component (E) is not particularly limited, from the standpoint of the coatability of the silicone composition according to the present invention, 1 part by mass or more is preferable, and 5 parts by mass or more is more preferable.

### [Component (F)]

The composition according to the present invention may further include (F) an alkoxysilane. The component (F) is an alkoxysilane represented by general formula (3) below:

R⁴_{d}R⁵ₑSi(OR⁶)_{4-d-e} (3)

(in this formula, each R⁴ independently represents an alkyl group having 9 to 15 carbon atoms, each R⁵ independently represents an unsubstituted or substituted monovalent hydrocarbon group having 1 to 8 carbon atoms, each R⁶ independently represents an alkyl group having 1 to 6 carbon atoms, d is an integer of 1 to 3 and e is an integer of 0 to 2, note that d + e is an integer of 1 to 3). The component (F) can be used alone or in combination of two or more kinds.

The component (F) functions as both a wetter component and an additive for preventing the deterioration of the component (A) under high-temperature and high-humidity conditions. Treating the surfaces of the thermally conductive fillers as the components (C) and (D) with the component (F) further improves the wettability of the component (A) with respect to the components (C) and (D). As a result, the component (F) assists in increasing the loading level of the components (C) and (D). Furthermore, the component (F), when used in combination with the component (A), works to suppress the contact between water vapor and the component (A) under high-temperature and high-humidity conditions. Consequently, the component (F) prevents the deterioration of the performance of the silicone composition according to the present invention due to the deterioration of the component (A) caused by hydrolysis or the like under high-temperature and high-humidity conditions. The component (F) may be used alone or in combination of two or more kinds.

Each R⁴ independently represents an alkyl group having 9 to 15 carbon atoms. Specific examples thereof include a nonyl group, a decyl group, a dodecyl group, a tetradecyl group and a pentadecyl group. If the number of carbon atoms is smaller than 9, the wettability with respect to the thermally conductive fillers (i.e., the components (C) and (D)) tends to be insufficient. If the number exceeds 15, the component (F) easily solidifies at normal temperature, which makes handling difficult. Furthermore, in some cases, the resulting composition may have reduced heat resistance and flame retardancy.

Each R⁵ independently represents an unsubstituted or substituted monovalent hydrocarbon group having 1 to 8 carbon atoms, which may be either saturated or unsaturated. Specific examples thereof include alkyl groups such as a methyl group, an ethyl group, a propyl group, a hexyl group and an octyl group; cycloalkyl groups such as a cyclopentyl group and a cyclohexyl group; alkenyl groups such as a vinyl group and an allyl group; aryl groups such as a phenyl group and a tolyl group; aralkyl groups such as a 2-phenylethyl group and a 2-methyl-2-phenylethyl group; and halogenated hydrocarbon groups such as a 3,3,3-trifluoropropyl group, a 2-(nonafluorobutyl)ethyl group and a p-chlorophenyl group. Among them, a methyl group and an ethyl group are preferable.

Each R⁶ independently represents an alkyl group having 1 to 6 carbon atoms. Specific examples thereof include a methyl group, an ethyl group, a propyl group, a butyl group, a pentyl group and a hexyl group. Among them, a methyl group and an ethyl group are preferable.

d is an integer of 1 to 3, preferably 1. e is an integer of 0 to 2. Note that d + e is an integer of 1 to 3.

Specific examples of the component (F) include the following:

C₁₀H₂₁Si(OCH₃)₃,

C₁₀H₂₁Si(OC₂H₅)₃,

C₁₂H₂₅Si(OCH₃)₃,

C₁₂H₂₅Si(OC₂H₅)₃,

C₁₀H₂₁Si(CH₃)(OCH₃)₂,

C₁₀H₂₁Si(C₆H₅)(OCH₃)₂,

C₁₀H₂₁Si(CH₃)(OC₂H₅)₂,

C₁₀H₂₁Si(CH=CH₂)(OCH₃)₂ and

C₁₀H₂₁Si(CH₂CH₂CF₃)(OCH₃)₂

When the component (F) is added, the amount thereof is preferably 0.1 to 50 parts by mass, more preferably 1 to 20 parts by mass, relative to 100 parts by mass of the total amount of the components (A) and (B). When the amount falls within this range, the wetter effect and the high-temperature high-humidity resistance effect tend to increase in accordance with the amount added. This provides economic advantages. Since the component (F) has slight volatility, when the silicone composition including the component (F) is left in an open system, the component (F) may evaporate from the silicone composition, causing the composition to gradually harden. When the amount of the component (F) added falls within the above range, such a phenomenon is less likely to occur.

In the case where the components (C) and (D) are surface-treated with the component (F), the treatment method may be selected from a spray method using fluid nozzles; a stirring method with shearing force, a dry method such as a ball mill or a mixer; and a wet method using an aqueous system or an organic solvent system. In the stirring method, it is essential to perform the operation to the extent that spherical aluminum oxide powder is not destroyed. The internal temperature in the dry method or the drying temperature after treatment is appropriately determined depending on the type of surface treatment agent, within a range that does not cause volatilization or decomposition of the surface treatment agent, and is 80°C to 180°C. In addition, a method may also be adopted in which the components (C) and (D) are heated and mixed together with the components (A) and (B), the resulting mixture is cooled, and the component (F) is added and mixed thereto.

### [Other Additives]

The silicone composition according to the present invention may further include, as an optional component, common additives, fillers and the like within a range that does not impair the advantageous effects of the present invention. Specifically, a fluorine-modified silicone surfactant; a coloring agent, such as carbon black, titanium dioxide and Bengala; as a flame retardant additive, a platinum catalyst or a metal oxide such as iron oxide, titanium oxide or cerium oxide; or a metal hydroxide may be added. Optionally, fine silica powders such as precipitated silica and calcined silica, thixotropy improvers and the like may be added as an agent for preventing sedimentation of the thermally conductive fillers at high temperatures. The amount of these additives is appropriately selected within normal ranges and within a range that does not impair the advantageous effects of the present invention.

### [Preparation of Composition]

The silicone composition according to the present invention is prepared by mixing the above-described components using a mixing apparatus such as a dough mixer (i.e., kneader), a gate mixer, a planetary mixer or the like. The resulting silicone composition has significantly improved thermal conductivity, and good workability, durability and reliability.

### [Thermal Conductivity]

The thermal conductivity of the silicone composition according to the present invention at 25°C is 4.0 W/m·K or more and less than 7.0 W/m·K, preferably 4.5 to 6.5 W/m·K, as measured by the hot disk method in accordance with ISO 22007-2. Setting the thermal conductivity to less than 7 W/m·K further improves the coatability of the silicone composition. The thermal conductivity of the composition according to the present invention can be measured using a thermal conductivity meter, such as "TPS 2500 S" manufactured by Kyoto Electronics Manufacturing Co., Ltd.

### [Viscosity]

The viscosity of the silicone composition according to the present invention at 25°C is 5 to 800 Pa·s, preferably 5 to 750 Pa·s, more preferably 5 to 500 Pa·s, as measured at a rotation speed of 10 rpm using a spiral viscometer. When the viscosity falls within this range, the resulting silicone composition tends to have good fluidity, which results in improvement in workability, such as dispensability and screen printability. This makes it easier to apply the composition thinly to a substrate. The viscosity of the silicone composition according to the present invention can be measured using a spiral viscometer, such as "Type PC-10AA" manufactured by Malcom Co., Ltd.

The silicone composition according to the present invention preferably has a viscosity of 1,000 Pa·s or less, more preferably 700 Pa·s or less, and further preferably 500 Pa·s or less, as measured at 25°C using the same method as described above after being subjected to thermal aging with a dryer at 200°C for 100 hours. Since the silicone composition is non-curing and thixotropic in this manner, the reliability of heat-generating electronic components can be ensured.

### [Thermal Resistance]

The thermal resistance of the silicone composition according to the present invention, as measured by the laser flash method at 25°C, is preferably 11 mm²·K/W or less, more preferably 10 mm²·K/W or less. With the configuration of the present invention, such a low thermal resistance silicone composition can be obtained.

The silicone composition according to the present invention preferably has a thermal resistance of 11 mm²·K/W or less, more preferably 10 mm²·K/W or less, at 25°C as measured by the laser flash method after being left for 96 hours under an atmosphere of 130°C and 85%RH. When the thermal resistance falls within this range, the silicone composition according to the present invention can efficiently dissipate heat generated from a heat-generating element to a heat-dissipating part, even when applied to a heat-generating element that generates a large amount of heat. Note that the thermal resistance measurement by the laser flash method can be performed in accordance with ASTM E1461.

### [Volume Resistivity]

The volume resistivity of the silicone composition according to the present invention is preferably 1×10⁹ Ω·cm or more, more preferably 1×10¹⁰ Ω·cm or more, as measured by a method in accordance with JIS K 6911. When the volume resistivity is within this range, the silicone composition according to the present invention can more reliably ensure insulating properties.

### [Applications of Silicone Composition]

The silicone composition according to the present invention is applied to heat-generating elements or heat-dissipating parts. Examples of the heat-generating elements include general power supplies; electronic devices such as power transistors for power supplies, power modules, thermistors, thermocouples and temperature sensors; and heat-generating electronic components such as integrated circuit elements including LSIs and CPUs. Examples of the heat-dissipating parts include heat-dissipating parts such as heat spreaders and heat sinks; and heat pipes and heat-dissipating plates. The composition may be applied, for example, by screen printing. The screen printing may be performed using, for example, a metal mask or a screen mesh. Applying the composition according to the present invention so as to be interposed between a heat-generating element and a heat-dissipating part allows heat generated from the heat-generating element to be efficiently transferred to the heat-dissipating part. As a result, the heat can be effectively removed from the heat-generating element.

### EXAMPLES

The present invention is specifically described with reference to the following Examples and Comparative Examples. However, the present invention is not particularly limited to these Examples.

### [Examples 1 to 6 and Comparative Examples 1 to 4]

In order to prepare the silicone composition according to the present invention, the following components were prepared. The kinematic viscosity was measured at 25°C using an Ostwald viscometer.

### Component (A)

A-1: An organopolysiloxane represented by the following formula, having a specific gravity (25°C) of 0.97 and a kinematic viscosity of 30 mm²/s.

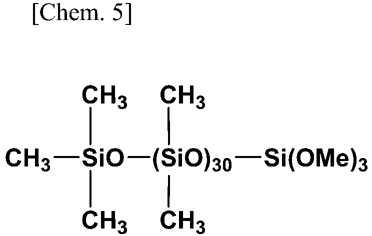

### Component (B)

B-1: Organopolysiloxane B-1: An organopolysiloxane represented by the following formula in which c is 2.0 in the average composition formula (2), having a specific gravity (25°C) of 0.97 and a kinematic viscosity of 500 mm²/s.

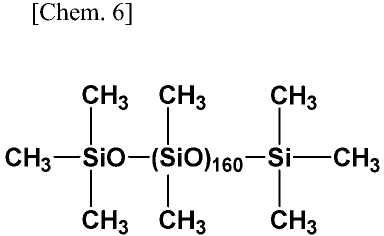

### (C) Aluminum oxide powder (specific gravity: 3.98)

**[Table 1]**

| Type | Average particle size (µm) | Crystal shape | D/H | Purity (%) | Coarse particle content (mass%) |
|---|---|---|---|---|---|
| C-1 | 20.3 | Polyhedral (mixture of octahedron and hexadecahedron), hexagonal close-packed lattice | 1.0 | 99.99 | 0.4 |
| C-2 | 8.4 | Polyhedral (mixture of octahedron and hexadecahedron), hexagonal close-packed lattice | 0.8 | 99.99 | 0 |
| C-3 (Comparative) | 31.4 | Polyhedral (mixture of octahedron and hexadecahedron), hexagonal close-packed lattice | 1.5 | 99.99 | 2.6 |
| C-4 (Comparative) | 3.5 | Polyhedral (mixture of octahedron and hexadecahedron), hexagonal close-packed lattice | 0.8 | 99.99 | 0.3 |
| C-5 (Comparative) | 20.1 | Spherical | - | 99.86 | 1.8 |
| C-6 (Comparative) | 9.6 | Spherical | - | 99.91 | 0.6 |

Note that "Average particle size" above is a volume-based value measured using a laser diffraction particle size distribution analyzer "SALD-2300" manufactured by Shimadzu Corporation, and calculated from the overall particle size distribution obtained by the laser diffraction particle size distribution. "Coarse particle content" refers to the proportion of coarse particles of 50 µm or more relative to the overall particle size distribution obtained by the laser diffraction particle size distribution.

### (D) Zinc oxide powder

### (D-1) Irregular zinc oxide powder (average particle size: 0.27 µm, coarse particle content of 10 µm or more: 0.1% by mass, specific gravity: 5.67)

Note that "Average particle size" above is a volume-based value measured using "Laser Diffraction Particle Size Distribution Analyzer SALD-2300" manufactured by Shimadzu Corporation, and calculated from the overall particle size distribution obtained by the laser diffraction particle size distribution. "Coarse particle content" refers to the proportion of coarse particles of 10 µm or more relative to the overall particle size distribution obtained by the laser diffraction particle size distribution.
(E) A volatile solvent capable of dispersing or dissolving the components (A-1), (B-1) and (F-1) (specific gravity: 0.79)
E-1: Isoparaffin-based solvent, boiling point: 210°C to 254°C; "ISOSOL (registered trademark) 400" (trade name, manufactured by ENEOS Corporation)

### (F) Alkoxysilane

F-1: An alkoxysilane represented by the following formula (specific gravity: 0.90) C₁₀H₂₁Si(OCH₃)₃

### [Production Method]

The components (A) to (D), and optionally, the components (E) and (F) as necessary, were mixed as described below to prepare the compositions of Examples 1 to 5 and Comparative Examples 1 to 4. Specifically, the components (A) to (D) were weighed according to the compositional ratios (parts by mass) shown in Tables 2 and 3 using a 5-liter planetary mixer (manufactured by Inoue Mfg., Inc.), and mixed under reduced pressure at 150°C for 1 hour under a pressure of 30 mmHg or less. The resulting mixture was cooled and mixed to normal temperature. When the components (E) and (F) were added, the cooled mixture was further mixed with the components (E) and (F) in the compounding amounts shown in Table 2 until uniform.

### [Test Method]

The properties of the silicone compositions were measured by the following test methods. Tables 2 and 3 show the results.

### <Viscosity>

After the silicone composition was left to stand in a constant temperature room at 25°C for 24 hours, the viscosity was measured at a rotation speed of 10 rpm using a viscometer (product name: Spiral Viscometer PC-10AA, manufactured by MALCOM Co., Ltd.).

### <Viscosity After Thermal Aging>

After the silicone composition was thermally aged at 200°C for 100 hours using a dryer, the composition was left to stand in a constant temperature room at 25°C for 24 hours. Then, the viscosity was measured in the same manner as described above.

### <Thermal Conductivity>

The thermal conductivity was measured on the basis of the hot disk method in accordance with ISO 22007-2.

Two samples of the silicone composition were prepared by wrapping the composition in kitchen plastic wrap to prevent bubbles and the like from entering. The samples were sandwiched between the sensors of a thermal conductivity meter (product name: TPS-2500 S, manufactured by Kyoto Electronics Manufacturing Co., Ltd.), and the thermal conductivity of the composition at 25°C was measured.

### <Volume Resistivity>

The volume resistivity was measured by the double-ring electrode method in accordance with JIS K 6911. A test piece was prepared so as to have a thickness of 1 mm. A voltage of 500 V was applied between the electrodes, and the volume resistivity after 1 minute was measured.

### <Preparation of Test Piece for Measurement of Thickness and Thermal Resistance>

A test piece was prepared by sandwiching the composition to a thickness of 40 µm between two circular aluminum plates having a diameter of 12.6 mm and a thickness of 1 mm, and applying a pressure of 0.15 MPa at 25°C for 60 minutes.

### <Measurement of Thickness>

The thickness of the test piece was measured using a micrometer (manufactured by Mitutoyo Corporation). The thickness of the two aluminum plates, which had been measured in advance, was subtracted to calculate the thickness of the composition.

### <Measurement of Thermal Resistance>

The thermal resistance (unit: mm²·K/W) of the composition was measured at 25°C using the above test piece and a thermal resistance measurement device based on the laser flash method (xenon flash analyzer; LFA447 NanoFlash, manufactured by Netzsch).

### <Measurement of Thermal Resistance After High Temperature and High Humidity Exposure>

After the thermal resistance of the above test piece was measured, the test piece was left to stand under an atmosphere of 130°C and 85%RH for 96 hours. Then, the thermal resistance (unit: mm²·K/W) of the composition was measured again using the same thermal resistance measuring device.

**[Table 2]**

| Amount (mass part) | Example 1 | Example 2 | Example 3 | Example 4 | Example 5 |
|---|---|---|---|---|---|
| A-1 | 100 | 100 | 90 | 90 | 50 |
| B-1 | | | 10 | 10 | 50 |
| C-1 | 1,610 | | 1,610 | 1,610 | 980 |
| C-2 | | 1,610 | | | |
| D-1 | 690 | 690 | 690 | 690 | 420 |
| E-1 | | | 15 | 15 | |
| F-1 | | | | 1 | |
| (C) + (D) total amount (mass%) | 83.6 | 83.6 | 81.2 | 81.0 | 75.7 |
| (C)/(D) mass ratio | 7.0/3.0 | 7.0/3.0 | 7.0/3.0 | 7.0/3.0 | 7.0/3.0 |
| Viscosity (Pa·s) | 232 | 403 | 81 | 79 | 215 |
| Viscosity after 200°C × 100-hour (Pa·s) | 258 | 441 | 161 | 142 | 228 |
| Thermal conductivity (W/m·K) | 6.3 | 5.1 | 5.4 | 5.3 | 4.4 |
| Volume resistivity (Ω·cm) | 7.4×10¹⁰ | 8.9×10¹⁰ | 6.9×10¹⁰ | 7.1×10¹⁰ | 3.4×10¹¹ |
| Thickness (µm) | 44 | 32 | 43 | 42 | 40 |
| Thermal resistance (mm²·K/W) | 6.8 | 5.9 | 7.7 | 7.8 | 8.9 |
| Thermal resistance after high-temperature high-humidity exposure (mm²·K/W) | 7.1 | 6.4 | 7.9 | 7.8 | 9.3 |

**[Table 3]**

| Amount (mass part) | Example 6 | Comp. Example 1 | Comp. Example 2 | Comp. Example 3 | Comp. Example 4 |
|---|---|---|---|---|---|
| A-1 | 50 | 50 | 100 | 50 | 50 |
| B-1 | 50 | 50 | 0 | 50 | 50 |
| C-1 | | | | | |
| C-2 | 980 | | | | |
| C-3 (comparative) | | 980 | | | |
| C-4 (comparative) | | | 980 | | |
| C-5 (comparative) | | | | 980 | |
| C-6 (comparative) | | | | | 980 |
| D-1 | 420 | 420 | 420 | 420 | 420 |
| (C) + (D) total amount (mass%) | 75.7 | 75.7 | 75.7 | 75.7 | 75.7 |
| (C)/(D) mass ratio | 7.0/3.0 | 7.0/3.0 | 7.0/3.0 | 7.0/3.0 | 7.0/3.0 |
| Viscosity (Pa·s) | 215 | 213 | 345 | 145 | 191 |
| Viscosity after 200°C × 100-hour (Pa·s) | 228 | 228 | 1,071 | 151 | 205 |
| Thermal conductivity (W/m·K) | 4.1 | 4.4 | 3.4 | 3.9 | 3.5 |
| Volume resistivity (Ω·cm) | 2.4×10¹¹ | 9.7×10¹⁰ | 2.5×10¹⁰ | 5.5×10¹⁰ | 2.9×10¹⁰ |
| Thickness (µm) | 33 | 54 | 12 | 59 | 38 |
| Thermal resistance (mm²·K/W) | 7.6 | 11.7 | 3.5 | 14.5 | 10.4 |
| Thermal resistance after high-temperature high-humidity exposure (mm²·K/W) | 8.1 | 12.0 | 3.8 | 15.9 | 12.3 |

## Claims

1. A silicone composition, comprising:
(A) an organopolysiloxane having a kinematic viscosity of 10 to 10,000 mm²/s at 25°C, the organopolysiloxane being represented by general formula (1) below: 50 to 100 parts by mass, 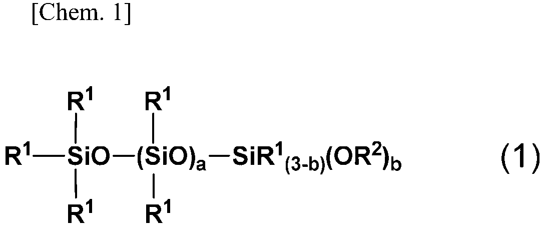 wherein each R¹ independently represents an unsubstituted or substituted monovalent hydrocarbon group, each R² independently represents an alkyl group, an alkoxyalkyl group, an alkenyl group or an acyl group, a represents an integer of 5 to 100 and b represents an integer of 1 to 3;
(B) an organopolysiloxane having a kinematic viscosity of 10 to 100,000 mm²/s at 25°C, the organopolysiloxane being represented by average composition formula (2) below: 0 to 50 parts by mass, (note that a total amount of the components (A) and (B) is 100 parts by mass)
R ³_{c}SiO_{(4-c)/2} (2)
wherein each R³ independently represents an unsubstituted or substituted monovalent hydrocarbon group having 1 to 18 carbon atoms and c represents a number of 1.8 to 2.2;
(C) an α-aluminum oxide powder having a hexagonal close-packed crystal structure consisting of a polyhedron having 8 or more faces, the α-aluminum oxide powder having a particle shape having a D/H ratio of 0.3 or more and 30 or less, where D represents a maximum particle diameter parallel to a hexagonal lattice face of the hexagonal close-packed lattice and H represents a particle diameter perpendicular to the hexagonal lattice face, the α-aluminum oxide powder having an average particle size of 7 to 30 µm, a proportion of coarse particles of 50 µm or more in a laser diffraction particle size distribution being 1% by mass or less relative to the total amount of the component (C), the α-aluminum oxide powder having a purity of 99% or more; and
(D) a zinc oxide powder having an average particle size of 0.01 µm or more and less than 3 µm, a proportion of coarse particles of 10 µm or more in a laser diffraction particle size distribution being 1% by mass or less relative to the total amount of the component (D),
(note that a ratio between the components (C) and (D) is 5 : 5 to 9.5 : 0.5 by mass, and a total content of (C) and (D) is 75% to 85% by volume)
the silicone composition having a thermal conductivity of 4.0 W/m·K or more and less than 7.0 W/m·K, as measured by a hot disk method in accordance with ISO 22007-2, the silicone composition having a viscosity of 5 to 800 Pa·s at 25°C, as measured with a spiral viscometer at a rotation speed of 10 rpm.

2. The silicone composition according to claim 1, wherein a thermal resistance of the silicone composition at 25°C, as measured by a laser flash method, is 11 mm²·K/W or less.

3. The silicone composition according to claim 1, wherein a thermal resistance of the silicone composition at 25°C, as measured by a laser flash method, after being left to stand in a 130°C/85%RH atmosphere for 96 hours, is 11 mm²·K/W or less.

4. The silicone composition according to claim 1, wherein a viscosity of the silicone composition at 25°C, as measured with a spiral viscometer at a rotation speed of 10 rpm, subsequent to a 200°C × 100-hour thermal aging, is 1,000 Pa·s or less.

5. The silicone composition according to claim 1, further comprising (E) a volatile solvent capable of dispersing or dissolving the components (A) and (B) : 100 parts by mass or less, relative to 100 parts by mass of the total amount of the components (A) and (B).

6. The silicone composition according to claim 1, further comprising (F) an alkoxysilane represented by general formula (3) below: 0.1 to 50 parts by mass, relative to 100 parts by mass of the total amount of the components (A) and (B),
R⁴_{d}R⁵ₑSi(OR⁶)_{4-d-e} (3)
wherein each R⁴ independently represents an alkyl group having 9 to 15 carbon atoms, each R⁵ independently represents an unsubstituted or substituted monovalent hydrocarbon group having 1 to 8 carbon atoms, each R⁶ independently represents an alkyl group having 1 to 6 carbon atoms, d represents an integer of 1 to 3, e represents a integer of 0 to 2, where d + e is an integer of 1 to 3, and wherein the components (C) and (D) are surface-treated with the component (F).

7. The silicone composition according to any one of claims 1 to 6, having a volume resistivity of 1×10⁹ Ω·cm or more.
